(19) Europäisches Patentamt
European Patent Office
Office européen des brevets

(11) **EP 4 582 574 A1**

(12) **EUROPEAN PATENT APPLICATION**
published in accordance with Art. 153(4) EPC

(43) Date of publication:
**09.07.2025 Bulletin 2025/28**

(21) Application number: **23859772.8**

(22) Date of filing: **12.06.2023**

(51) International Patent Classification (IPC):
*C22C 14/00* (2006.01)   *C22F 1/00* (2006.01)
*C22F 1/18* (2006.01)   *G02C 5/00* (2006.01)

(52) Cooperative Patent Classification (CPC):
**C22C 14/00; C22F 1/00; C22F 1/18; G02C 5/00**

(86) International application number:
**PCT/JP2023/021740**

(87) International publication number:
**WO 2024/048002 (07.03.2024 Gazette 2024/10)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.08.2022   JP 2022136623**

(71) Applicant: NIPPON STEEL CORPORATION
Chiyoda-ku
Tokyo 100-8071 (JP)

(72) Inventors:
• **TSUKAMOTO, Genki**
  **Tokyo 100-8071 (JP)**
• **KUNIEDA, Tomonori**
  **Tokyo 100-8071 (JP)**
• **TAKAHASHI, Kazuhiro**
  **Tokyo 100-8071 (JP)**

(74) Representative: **Vossius & Partner
Patentanwälte Rechtsanwälte mbB
Siebertstrasse 3
81675 München (DE)**

(54) **TITANIUM ALLOY SHEET AND EYE GLASSES**

(57) A titanium alloy sheet includes, as a chemical composition, by mass%: Al: 1.00% to 7.00%; Fe: 0.10% to 1.70%; O: 0.05% to 0.30%; N: 0.000% to 0.080%; C: 0.000% to 0.100%; H: 0.000% to 0.013%; Cu: 0.00% to 2.00%; Si: 0.00% to 0.30%; and a remainder: Ti and impurities, a microstructure includes, by an area ratio, 80% or more of an $\alpha$ phase, an average grain size of the $\alpha$ phase is 20.0 $\mu$m or less, an area ratio of crystal grains $\alpha_{t-30}$ in which an angle formed between a c-axis and a thickness direction of the titanium alloy sheet is within 30 degrees in the $\alpha$ phase is 20% to 60%, and an area ratio of crystal grains in which an average value of GOS measured using EBSD is 2.0 or less in the $\alpha_{t-30}$ is 80% or more.

EP 4 582 574 A1

**Description**

TECHNICAL FIELD

The present invention relates to a titanium alloy sheet and eye glasses.
Priority is claimed on Japanese Patent Application No. 2022-136623, filed on August 30, 2022, the content of which is incorporated herein by reference.

BACKGROUND ART

Titanium alloys are used for eye glasses and accessories such as watch cases due to their characteristics such as being lightweight, and having high corrosion resistance and biocompatibility. Stainless steel is also used for the same application. However, titanium has a smaller specific gravity than stainless steel and is thus advantageous in terms of weight reduction. In addition, titanium is excellent since it does not cause metal allergies. On the other hand, titanium is inferior in mirror finishing properties after polishing compared to stainless steel.
For example, pure titanium has low hardness and abrasive grains thus form large dimples thereon, so that a mirror-finished state may not be obtained after polishing. Meanwhile, with titanium alloys of the related art having increased hardness, it is difficult to work them into highly precise product shapes that are becoming more common these days. In addition, in titanium alloys, a crystal pattern or irregularities may appear depending on the state of a microstructure on the surface after polishing, and it may be difficult to obtain excellent mirror finishing properties simply by increasing the hardness.
Therefore, there has been a demand for titanium alloys having excellent mirror finishing properties (mirror finishing properties after polishing) and workability.
In response to such a problem, for example, Patent Document 1 discloses a clock component that contains a titanium alloy, has good workability, and is capable of obtaining excellent mirror finishing properties.
Patent Document 2 discloses a high-strength titanium alloy including, by mass%, Zr: 0.5% to 5%, Fe: 0.5% to 3.5%, oxygen: 0.05% to 0.5%, and a remainder: titanium and inevitable components, and a glasses frame made of the high-strength titanium alloy. In addition, Patent Document 2 discloses that when Zr, Fe, and O are contained in a balanced manner, cold plastic workability is ensured together with high strength, and machinability, mirror polishing properties, and the like are also ensured.

Citation List

Patent Documents

Patent Document 1: PCT International Publication No. WO2019/044851
Patent Document 2: Japanese Unexamined Patent Application, First Publication No. 2001-220631

SUMMARY OF INVENTION

Technical Problem

However, in the techniques of Patent Documents 1 and 2, although certain workability and mirror finishing properties can be ensured, it may not be possible to meet the higher demands required in recent years.
Therefore, an object of the present invention is to provide a titanium alloy sheet having excellent workability (particularly bendability) and mirror finishing properties, and eye glasses including the titanium alloy sheet.

Solution to problem

The present inventors have studied a method of ensuring sufficient workability of a titanium alloy sheet and suppressing the occurrence of irregularities during polishing. As a result, they have found that it is important to increase the strength at middle to high temperatures, refine crystal grains, increase the proportion of crystal grains having a predetermined orientation, and reduce variation in the orientation in the crystal grains.
The present invention has been contrived in view of the above problems. The gist of the present invention is as follows.

[1] A titanium alloy sheet according to an aspect of the present invention includes, as a chemical composition, by mass%: Al: 1.00% to 7.00%; Fe: 0.10% to 1.70%; O: 0.05% to 0.30%; N: 0.000% to 0.080%; C: 0.000% to 0.100%; H: 0.000% to 0.013%; Cu: 0.00% to 2.00%; Si: 0.00% to 0.30%; and a remainder: Ti and impurities, a microstructure includes, by an area ratio, 80% or more of an $\alpha$ phase, an average grain size of the $\alpha$ phase is 20.0 $\mu$m or less, an area ratio of crystal grains $\alpha_{t\text{-}30}$ in which an angle formed between a c-axis and a thickness direction of the titanium alloy sheet is within 30 degrees in the $\alpha$ phase is 20% to 50%, and an area ratio of crystal grains in which an average value of GOS measured using EBSD is 2.0 or less in the $\alpha_{t\text{-}30}$ is 80% or more.

[2] In the titanium alloy sheet according to [1], an area ratio of crystal grains $\alpha_{c\text{-}30}$ in which an angle formed between the c-axis and a sheet width direction of the titanium alloy sheet is within 30 degrees in the $\alpha$ phase may be 8% or more.

[3] In the titanium alloy sheet according to [1], the area ratio of the $\alpha_{t\text{-}30}$ may be 20% to 40%.

[4] In the titanium alloy sheet according to [2], the area ratio of the $\alpha_{t\text{-}30}$ may be 20% to 40%.

[5] In the titanium alloy sheet according to [1], the chemical composition may include, by mass%, Al: 1.00% to 3.50%, Fe: 0.10% to 0.40%, O: 0.05% to 0.15%, N: 0.000% to 0.080%, C: 0.000% to 0.100%, H: 0.000% to 0.013%, Cu: 0.00% to 2.00%, Si: 0.00% to 0.30%, and a remainder: Ti and impurities.

[6] In the titanium alloy sheet according to [2], the chemical composition may include, by mass%, Al: 1.00% to 3.50%, Fe: 0.10% to 0.40%, O: 0.05% to 0.15%, N: 0.000% to 0.080%, C: 0.000% to 0.100%, H: 0.000% to 0.013%, Cu: 0.00% to 2.00%, Si: 0.00% to 0.30%, and a remainder: Ti and impurities.

[7] In the titanium alloy sheet according to [3], the chemical composition may include, by mass%, Al: 1.00% to 3.50%, Fe: 0.10% to 0.40%, O: 0.05% to 0.15%, N: 0.000% to 0.080%, C: 0.000% to 0.100%, H: 0.000% to 0.013%, Cu: 0.00% to 2.00%, Si: 0.00% to 0.30%, and a remainder: Ti and impurities.

[8] In the titanium alloy sheet according to [4], the chemical composition may include, by mass%, Al: 1.00% to 3.50%, Fe: 0.10% to 0.40%, O: 0.05% to 0.15%, N: 0.000% to 0.080%, C: 0.000% to 0.100%, H: 0.000% to 0.013%, Cu: 0.00% to 2.00%, Si: 0.00% to 0.30%, and a remainder: Ti and impurities.

[9] In the titanium alloy sheet according to any one of [1] to [8], a sheet thickness may be 12 mm or less.

[10] Eye glasses according to another aspect of the present invention include: the titanium alloy sheet according to any one of [1] to [8].

[11] Eye glasses according to a further aspect of the present invention include: the titanium alloy sheet according to [9].

Advantageous Effects of Invention

According to the aspect of the present invention, it is possible to provide a titanium alloy sheet having excellent workability and mirror finishing properties, and eye glasses including the titanium alloy sheet.

BRIEF DESCRIPTION OF DRAWINGS

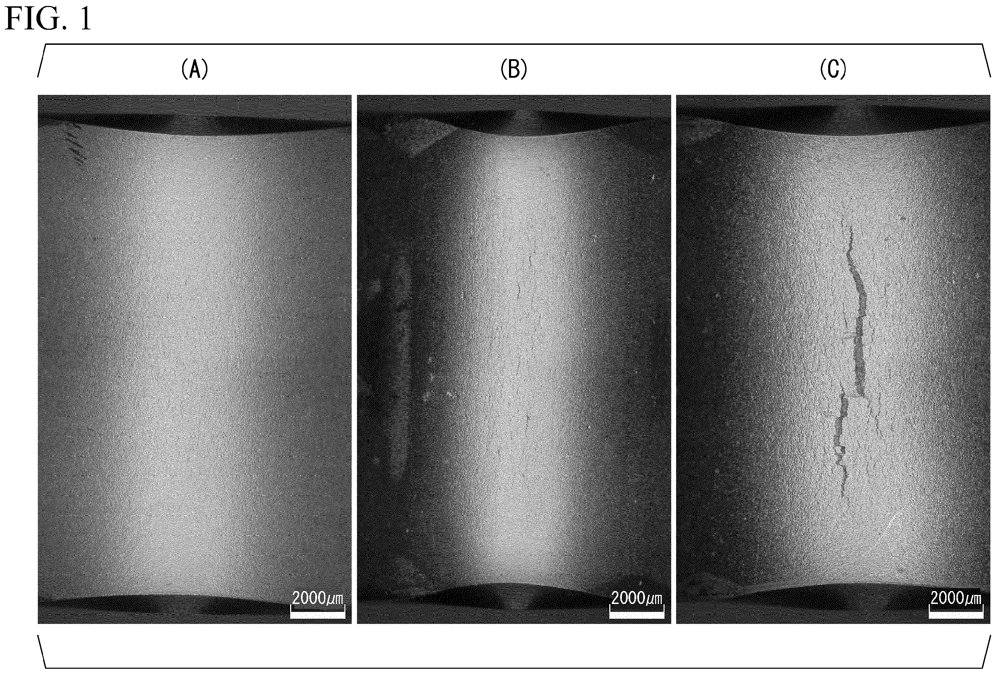

[FIG. 1] FIG. 1 shows examples of bending test results: an example (A) in a case where neither cracks nor irregularities were confirmed; an example (B) in a case where, although no cracks were present, fine irregularities were confirmed, and an example (C) in a case where cracks were confirmed.

DESCRIPTION OF EMBODIMENTS

A titanium alloy sheet according to an embodiment of the present invention (a titanium alloy sheet according to the present embodiment), eye glasses, and preferable manufacturing methods of the titanium alloy sheet and the eye glasses will be described.

<Titanium Alloy Sheet>

The titanium alloy sheet according to the present embodiment has a microstructure including, by an area ratio, 80% or more of an $\alpha$ phase, and the average grain size of the $\alpha$ phase is 20.0 $\mu$m or less.

In the titanium alloy sheet according to the present embodiment, the area ratio of crystal grains $\alpha_{t\text{-}30}$ in which the angle formed between a c-axis and a thickness direction of the alloy sheet is within 30 degrees in the $\alpha$ phase is 20% to 50%, and the area ratio of crystal grains in which an average value of GOS measured using EBSD is 2.0 or less in the $\alpha_{t\text{-}30}$ is 80% or more.

These will be described below.

(Microstructure)

[Area Ratio of α Phase: 80% or More]

In the titanium alloy sheet according to the present embodiment, an α phase is a primary structure in the microstructure. Specifically, the α phase fraction in an entire evaluation surface is 80% or more by area ratio. The area ratio of the α phase is preferably 85% or more, more preferably 90% or more, still more preferably 95% or more, and even more preferably 98% or more. In addition to the α phase, a β phase, $Ti_2Cu$, and $Ti_5Si_3$ may be present. Since the β phase suppresses the grain growth, the β phase may be contained in an amount of 1% to 20%.

The area ratio of the α phase is obtained by the following method.

The α phase is uniformly distributed. Therefore, the area ratio of each phase which is included in the microstructure of the titanium alloy sheet may be measured in an arbitrary cross section of the titanium alloy sheet. In the present disclosure, the measurement is performed by, for example, observing a cross section perpendicular to a sheet width direction at a sheet width-112 position (a position of half the width of the sheet from an end portion of the sheet in the sheet width direction: a portion at the center of the width) of the titanium alloy sheet.

Specifically, a cross section of the titanium alloy sheet perpendicular to the sheet width direction at the sheet width-1/2 position is polished and set as an observation surface, and in a visual field of 500 μm × 500 μm, a concentration distribution of Ti, Fe, Cu, and Si is measured at a pitch (step: 1.0 μm) of 1.0 μm using scanning electron microscopy (SEM) or an electron probe microanalyzer (EPMA). Since Fe, Cu, and Si are concentrated in the β phase, $Ti_2Cu$ portion, or $Ti_5Si_3$ portion, regions where the concentrations of these elements are 1.7 times or more the average in the entire visual field are defined as the β phase, $Ti_2Cu$, or $Ti_5Si_3$, and the area ratio of the regions relative to the entire visual field is calculated as the area ratio of the β phase, $Ti_2Cu$, or $Ti_5Si_3$. In addition, the area ratio of the regions is subtracted from 100% to calculate the area ratio of the α phase.

[Average Grain Size of α Phase: 20.0 μm or Less]

In a case where the average grain size of the α phase, which is a primary phase, is small, the occurrence of irregularities during polishing is suppressed, and the mirror finishing properties are improved. Specifically, in a case where the average grain size of the α phase is 20.0 μm or less, the mirror finishing properties are improved. Meanwhile, in a case where the average grain size is more than 20.0 μm, irregularities occur due to the grain shape during polishing, and the mirror finishing properties deteriorate. Therefore, the average grain size is 20.0 μm or less. The average grain size is preferably 15.0 μm or less.

The lower limit of the average grain size is not particularly provided. However, since the average grain size cannot be adjusted to less than 2.0 μm in practice, the average grain size may be set to 2.0 μm or more.

In the titanium alloy sheet according to the present embodiment, the average grain size of the α phase can be measured by observing a cross section of the titanium alloy sheet perpendicular to the sheet width direction by the following method.

That is, a cross section of the titanium alloy sheet perpendicular to the sheet width direction is polished and set as an observation surface, a region of 1.0 mm × 1.0 mm is set as a measurement region in the surface, and the measurement is performed with a step size of 1.0 μm by an electron backscatter diffraction (EBSD) method while scanning electron beams using a scanning electron microscope (SEM) to obtain an EBSD pattern. In this case, Titanium (alpha) and Titanium (beta) are selected as phases to be measured. In a case where the sheet thickness is 1.0 mm or less, the measurement length may be adjusted so that the measurement area is 1.0 $mm^2$.

From the obtained data (EBSD pattern), the average grain size is measured using OIM Analysis software manufactured by TSL Solutions. Specifically, regarding pixels determined to be Titanium (Alpha), boundaries with an orientation difference of 15° or more are recognized as grain boundaries, and in a case where a region surrounded by grain boundaries includes two or more pixels, the region surrounded by the grain boundaries is defined as a crystal grain. By obtaining the arithmetic average of equivalent circle diameters of the crystal grains in the measurement region, the average grain size is obtained.

[Area Ratio of Crystal Grains ($\alpha_{t-30}$) in which Angle Formed Between c-Axis and Thickness Direction (sheet thickness direction) of Titanium Alloy Sheet is Within 30 Degrees in α Phase: 20% to 50%]

In a case where the titanium alloy sheet is used as a material for eye glasses, a surface perpendicular to the sheet thickness direction is often a polished surface. Crystal grains having a crystal orientation in which the c-axis is close to parallel to the sheet thickness direction (an angle formed between the c-axis and the sheet thickness direction is within 30 degrees) in the α phase contribute to the improvement of the mirror finishing properties by increasing the hardness of the polished surface.

In order to obtain the above effect, the area ratio of the crystal grains ($\alpha_{t-30}$) in which the angle formed between the c-axis and the thickness direction of the titanium alloy sheet is within 30 degrees in the α phase is set to 20% or more. The

area ratio of $\alpha_{t-30}$ is preferably 25% or more, and more preferably 30% or more. Meanwhile, as the area ratio of $\alpha_{t-30}$ increases, the bendability decreases. Therefore, the area ratio of $\alpha_{t-30}$ is set to 50% or less. The area ratio of $\alpha_{t-30}$ is preferably 45% or less, and more preferably 40% or less.

[Preferable Area Ratio of Crystal Grains in which Angle Formed Between c-Axis and Sheet Width Direction of Titanium Alloy Sheet is Within 30 Degrees in $\alpha$ Phase: 8% or more]

In the $\alpha$ phase, crystal grains having a crystal orientation in which the c-axis is close to parallel to the sheet width direction of the titanium alloy sheet contribute to the improvement of L-direction bendability (bendability in which a crease is parallel to the sheet width direction). In a case where the area ratio of crystal grains ($\alpha_{c-30}$) in which the angle formed between the c-axis and the sheet width direction of the titanium alloy sheet is within 30 degrees is 8% or more, further excellent bendability is obtained. Therefore, in the titanium alloy sheet according to the present embodiment, the area ratio of $\alpha_{c-30}$ is preferably 8% or more. The area ratio of $\alpha_{c-30}$ is more preferably 10% or more. In a case where the area ratio of $\alpha_{c-30}$ is too large, the area ratio of $\alpha_{t-30}$ relatively decreases. Therefore, the area ratio of $\alpha_{c-30}$ may be set to 30% or less.
The area ratio of the crystal grains ($\alpha_{c-30}$) in which the angle formed between the c-axis and the sheet width direction is within 30 degrees and the area ratio of the crystal grains ($\alpha_{t-30}$) in which the angle formed between the c-axis and the sheet thickness direction is within 30 degrees can be measured by observing a cross section of the titanium alloy sheet perpendicular to the sheet width direction.
Specifically, a cross section of the titanium alloy sheet perpendicular to the sheet width direction is polished and set as an observation surface, and a region of 1.0 mm $\times$ 5.0 mm centered on a center portion in the sheet thickness of the surface is measured with a step size of 1.0 $\mu$m by an electron backscatter diffraction (EBSD) method while scanning electron beams using a scanning electron microscope (SEM) to obtain an EBSD pattern. In a case where the sheet thickness is 1.0 mm or less, the measurement length may be adjusted so that the measurement area is 5.0 mm$^2$.
From the obtained data (EBSD pattern), the area ratios of ($\alpha_{c-30}$) and ($\alpha_{t-30}$) are evaluated using OIM Analysis software manufactured by TSL Solutions. In that case, the calculation is performed using only data in which a CI value indicating orientation reliability is 0.1 or more.

[Area Ratio of Crystal Grains in which GOS is 2.0 or Less in $\alpha_{t-30}$: 80% or More]

The grain orientation spread (GOS) is a parameter indicating variation in the orientation in the crystal grains, and can be obtained for each crystal grain. The smaller the parameter, the smaller the variation in orientation.
In $\alpha_{t-30}$ (crystal grains in which the angle formed between the c-axis and the sheet thickness direction is within 30 degrees), in a case where the variation is further reduced in the crystal grains, polishing is uniformly performed during polishing, and the mirror finishing properties are improved. Specifically, in a case where the area ratio of crystal grains in which GOS is 2.0 or less is 80% or more, the mirror finishing properties are improved. In a case where the area ratio of crystal grains in which GOS is 2.0 or less in $\alpha_{t-30}$ is less than 80%, the irregularities on the surface after polishing are not uniform, and the mirror finishing properties deteriorate.
The area ratio of crystal grains in which GOS is 2.0 or less in $\alpha_{t-30}$ is preferably 85% or more, and more preferably 90% or more. The upper limit of the area ratio of crystal grains in which GOS is 2.0 or less is not limited and may be 100%. However, the upper limit may be set to 99% or less in consideration of a manufacturing load or the like.
The area ratio of crystal grains in which GOS is 2.0 or less in $\alpha_{t-30}$ can be obtained by the following method.
A cross section of the titanium alloy sheet perpendicular to the sheet width direction is polished and set as an observation surface, and a region of 1.0 mm $\times$ 5.0 mm in the surface is measured with a step size of 1.0 $\mu$m by an electron backscatter diffraction (EBSD) method while scanning electron beams using a scanning electron microscope (SEM) to obtain an EBSD pattern. In a case where the sheet thickness is 1.0 mm or less, the measurement length may be adjusted so that the measurement area is 5.0 mm$^2$.
From the obtained EBSD data, the area ratio of crystal grains in which GOS is 2.0 or less can be evaluated using OIM Analysis software manufactured by TSL Solutions.
Specifically, boundaries with an orientation difference of 15° or more are recognized as grain boundaries, and in a case where a region surrounded by grain boundaries includes two or more pixels, the region surrounded by the grain boundaries is defined as a crystal grain. Thereafter, the GOS of each crystal grain of $\alpha_{t-30}$ identified by the above method is calculated, and an area ratio of the crystal grains in which GOS is 2.0 or less is obtained.

(Chemical Composition)

The chemical composition of the titanium alloy sheet according to the present embodiment is set within the following ranges. Hereinafter, % relating to the amount of an element means mass% unless otherwise specified.

[Al: 1.00% to 7.00%]

Al is an element that stabilizes the $\alpha$ phase. In addition, Al is an element that increases the hardness of the titanium alloy sheet at room temperature and in a middle to high temperature range. In many cases, accessories are polished in a dry manner, and the mirror finishing properties deteriorate in many cases due to a decrease in hardness caused by heat generated during working. Therefore, the mirror finishing properties are improved by containing Al, which is effective in increasing the hardness not only at room temperature but also in a middle to high temperature range. In order to obtain an effect of improving the mirror finishing properties, the Al content is set to 1.00% or more. The Al content is preferably 1.50% or more.

Meanwhile, in a case where the Al content is too high, the ductility decreases and the bend formability deteriorates. Therefore, the Al content is set to 7.00% or less from the viewpoint of formability. The Al content is preferably 3.50% or less, more preferably 3.00% or less, and still more preferably 2.50% or less.

[Fe: 0.10% to 1.70%]

Fe is an element that stabilizes the $\beta$ phase, and the $\beta$ phase is formed during annealing by containing Fe. Since the $\beta$ phase contributes to the suppression of growth of the crystal grains of the $\alpha$ phase by an austenite pinning effect, the crystal grains can be refined by containing Fe. In order to obtain this effect, the Fe content is set to 0.10% or more. The Fe content is preferably 0.15% or more.

Meanwhile, in a case where the Fe content is too high, the formability of the titanium alloy sheet deteriorates. Therefore, the Fe content is set to 1.70% or less from the viewpoint of formability. The Fe content is preferably 0.40% or less, and more preferably 0.30% or less.

[O: 0.05% to 0.30%]

O is an element that increases the hardness and improves the mirror finishing properties of the titanium alloy sheet. In order to obtain this effect, the O content is set to 0.05% or more. The O content is preferably 0.07% or more.

Meanwhile, in a case where the O content is too high, the ductility of the titanium alloy sheet decreases, and thus the bend formability deteriorates. Therefore, the O content is set to 0.30% or less from the viewpoint of formability. The O content is preferably 0.20% or less, more preferably 0.15% or less, and still more preferably 0.12% or less.

[N: 0.000% to 0.080%]

N is an element influencing the strength and workability of the titanium alloy sheet. In a case where the N content is too high, the ductility of the titanium alloy sheet decreases, and thus the bend formability deteriorates. Therefore, the N content is set to 0.080% or less. The N content is preferably 0.060% or less, more preferably 0.040% or less, and still more preferably 0.020% or less.

N does not need to be contained, and the N content may be 0.000%. However, industrially, it is not easy to set the N content to less than 0.001%. Therefore, the N content may be set to 0.0001 % or more, 0.002% or more, or 0.003% or more.

[C: 0.000% to 0.100%]

C has a smaller influence on the strength and workability than O and N, but is an element influencing the strength and workability like O and N. In a case where the C content is too high, the workability decreases. Therefore, the C content is set to 0.100% or less. The C content is preferably 0.080% or less, more preferably 0.060% or less, still more preferably 0.040% or less, and even more preferably 0.020% or less.

In the titanium alloy sheet according to the present embodiment, C is not essentially contained, and the C content may be 0.000%. However, industrially, it is not easy to set the C content to less than 0.001%. Therefore, the C content may be set to 0.001% or more, 0.002% or more, or 0.003% or more.

[H: 0.000% to 0.013%]

H is an element causing embrittlement. However, in a case where the content thereof is 0.013% or less, no problems occur in practical use although there is a concern about embrittlement. Therefore, the H content is set to 0.013% or less. The H content is preferably 0.010% or less, more preferably 0.008% or less, and still more preferably 0.006% or less, 0.004% or less, or 0.003% or less.

H is not essentially contained, and the H content may be 0.000%. The H content may be set to 0.001% or more, 0.002% or more, or 0.003% or more as necessary.

[Cu: 0.00% to 2.00%]

Cu is an element that increases the strength in a room temperature to middle temperature range. Therefore, Cu may be contained. In a case where the above effect is obtained, the Cu content is preferably set to 0.50% or more.
Meanwhile, in a case where the Cu content is more than 2.00%, $Ti_2Cu$ excessively precipitates and the ductility deteriorates. Therefore, the Cu content is set to 2.00% or less.

[Si: 0.00% to 0.30%]

Si is an element that increases the strength in a room temperature to middle temperature range. Therefore, Si may be contained. In a case where the above effect is obtained, the Si content is preferably set to 0.10% or more.
Meanwhile, in a case where the Si content is more than 0.30%, $Ti_5Si_3$ excessively precipitates and the ductility deteriorates. Therefore, the Si content is set to 0.30% or less. The Si content is preferably 0.20% or less, more preferably 0.18% or less, and still more preferably 0.15% or less.

[Remainder: Ti and impurities]

The titanium alloy sheet according to the present embodiment contains, as a chemical composition, the above-described elements, and a remainder of Ti and impurities.
The impurities include, for example, metal elements derived from scraps used as raw materials. Specifically, in a case where using scraps as raw materials is promoted, metal elements other than the above-described elements (Al, Fe, O, N, C, H, Cu, and Si) are incorporated in addition to the above elements. It is possible to prevent the elements from being incorporated by strict management, but the treatment cost is increased. Therefore, in the titanium alloy sheet according to the present embodiment, the incorporation of metal elements derived from scraps (containing the metal elements as impurities) is allowed to such an extent that the effects of the titanium alloy sheet according to the present embodiment are not impaired, with the purpose of providing an inexpensive titanium alloy sheet. Examples of the metal elements derived from scraps include Cr, Ni, Mo, V, Sn, Co, Zr, Nb, Mn, Ta, W, Hf, Pd, and Ru. In a case where the above elements are contained, no problems occur if the amount of each element is, for example, 0.10% or less and the total amount is 0.50% or less.

(Sheet Thickness)

The sheet thickness of the titanium alloy sheet according to the present embodiment is not limited, but is preferably 12.0 mm or less in consideration of using as a material for eye glasses. In addition, the sheet thickness is preferably 0.2 mm or more in terms of ensuring stiffness.

<Eye Glasses>

Eye glasses (spectacles) according to the present embodiment are manufactured using, for a frame portion or the like, a titanium alloy obtained by performing cold working and the like on the above-described titanium alloy sheet according to the present embodiment. Therefore, the eye glasses according to the present embodiment include at least a portion made of the titanium alloy sheet according to the present embodiment.

<Manufacturing Method of Titanium Alloy Sheet>

The titanium alloy sheet according to the present embodiment can obtain the effects as long as the titanium alloy sheet has the above-described characteristics regardless of the manufacturing method. However, it is preferable to use a manufacturing method including the following processes (I) to (IV) since the titanium alloy sheet can be stably manufactured.

(I) a melting process of melting a titanium raw material manufactured to have a predetermined purity by a known method to prepare a predetermined ingot
(II) a blooming process of working the ingot to obtain a slab as necessary
(III) a hot rolling process of hot-rolling the ingot or the slab to obtain a titanium alloy sheet
(IV) a hot-rolled sheet annealing process of annealing the titanium alloy sheet after the hot rolling process

In a case where a titanium alloy sheet with a further increased area ratio of $\alpha_{t-30}$ is obtained, it is preferable to use a manufacturing method including the following (1) to (VI).

> (I) a melting process of melting a titanium raw material manufactured to have a predetermined purity by a known method to prepare a predetermined ingot
> (II) a blooming process of working the ingot to obtain a slab
> (III) a hot rolling process of hot-rolling the ingot or the slab to obtain a titanium alloy sheet
> (IV') a hot-rolled sheet annealing process of annealing the titanium alloy sheet after the hot rolling process as necessary
> (V) a cold rolling process of cold-rolling the titanium alloy sheet after the hot rolling process or the hot-rolled sheet annealing process
> (VI) an annealing process of annealing the titanium alloy sheet after the cold rolling process

In addition, the manufacturing method of the titanium alloy sheet according to the present embodiment may further include the following process after the hot-rolled sheet annealing process or the annealing process as necessary.

(VII) a temper rolling/tensile straightening process of performing temper rolling or tensile straightening on the titanium alloy sheet

Hereinafter, the processes will be described.

Known conditions can be applied to processes and conditions not described.

(I) Melting Process

In the melting process, a titanium raw material manufactured to have a predetermined purity is melted by a known method, and other elements are added as necessary to prepare an ingot having a predetermined chemical composition (in a case where the titanium alloy sheet according to the present embodiment is obtained, the chemical composition is the same as the titanium alloy sheet according to the present embodiment). The melting method is not limited. However, a vacuum arc remelting method (VAR method) or an electron beam melting method (EB method) can be applied, for example.

(II) Blooming Process

In the blooming process, the obtained ingot is worked by known blooming or forging to prepare a slab. The slab (titanium slab) obtained through the above-described blooming process may be subjected to cutting, a washing treatment, or the like by a known method as necessary. The blooming process may be omitted as necessary. The titanium slab may be subjected to a pre-treatment such as a washing treatment or cutting as necessary.

(III) Hot Rolling Process

In the hot rolling process, the ingot obtained in the melting process or the slab obtained in the blooming process is heated and hot-rolled to prepare a titanium alloy sheet.

In a case where the titanium alloy sheet according to the present embodiment is obtained, it is important to control a heating temperature, an finishing temperature (hot rolling completion temperature), and a rolling reduction during hot rolling.

Heating Temperature: $T_{\beta 80}$°C or lower

In order to develop a crystal orientation in which the angle formed between the c-axis and the sheet thickness direction is within 30 degrees, it is necessary to perform working in a temperature range where the $\alpha$ phase is dominant. Therefore, the heating temperature during hot rolling is set to a temperature ($T_{\beta 80}$) (°C) or lower at which the volume percentage of the $\beta$ phase is 80%. In a case where the heating temperature is higher than $T_{\beta 80}$°C, the degree of integration of crystal orientations in which the angle formed between the c-axis and the sheet thickness direction is within 30 degrees is reduced. In addition, even in a case where crystal grains in which the angle formed between the c-axis and the sheet thickness direction is within 30 degrees are formed during hot rolling, it is not possible to apply sufficient strain, and thus recrystallization may not occur even in a case where annealing is subsequently performed. In this case, the proportion of crystal grains with a high GOS value increases, and the mirror finishing properties deteriorate.

Meanwhile, in order to develop a crystal orientation in which the angle formed between the c-axis and the sheet width direction is within 30 degrees with excellent L-bendability, it is necessary to perform rolling in a state of the $\beta$ phase. Therefore, in a case where the area ratio of $\alpha_{c-30}$ is increased, the heating temperature is preferably set to a temperature

($T_{\beta20}$) (°C) or higher at which the β phase fraction is 20%.

In the related art, the hot rolling of a titanium alloy was generally performed by heating in a β single phase region from the viewpoint of a decrease in deformation resistance and texture control. However, in the present embodiment, the hot rolling is performed under the above conditions based on new findings that, in a case where the rolling is performed by heating in a β single phase region, the orientation distribution in the crystal grains after transformation to the α phase increases, the proportion of crystal grains in which the angle formed between the c-axis and the thickness direction is within 30 degrees decreases in texture, and thus poor polishing properties are exhibited.

Hot Rolling Completion Temperature: 600°C or higher and $T_{\beta10}$°C or lower

A texture, called a T-texture, in which the normal to a basal plane (0001) α of the α phase is strongly integrated in the sheet width direction (T-direction) perpendicular to the rolling direction and the normal direction of the sheet surface is in an orientation having excellent L-direction bending, but the T-texture grains immediately after transformation from the β phase to the α phase are crystal grains with a high GOS value. In order to rectify this problem, it is necessary to apply strain, and then perform annealing under predetermined conditions to cause recrystallization.

In a case where the volume percentage of the β phase is high at the completion of the hot rolling, the proportion of T-texture grains with a high GOS value increases, and the mirror finishing properties deteriorate. Specifically, in a case where the hot rolling completion temperature is higher than a temperature ($T_{\beta10}$) (°C) at which the volume percentage of the β phase is 10%, the mirror finishing properties deteriorate. Therefore, the hot rolling completion temperature is set to $T_{\beta10}$°C or lower.

Meanwhile, the hot rolling completion temperature is set to 600°C or higher since there is a concern that, in a case where the hot rolling completion temperature is lower than 600°C, the area ratio of $\alpha_{t-30}$ may excessively increase or cracks may occur during rolling. Here, the cracks include a so-called cracked edge and an internal crack. In a case where an internal crack occurs, it is difficult to proceed to the subsequent processes. In a case where a cracked edge is generated, there is increasing concern that the sheet may be fractured, particularly in rolling such as tandem rolling performed while a tension is applied to the titanium alloy sheet.

Each of the temperatures at which the β phase is a predetermined volume percentage, such as $T_{\beta10}$, $T_{\beta20}$, and $T_{\beta80}$ described above and $T_{\beta30}$ and $T_{\beta50}$ to be described below, can be acquired from a state diagram. The state diagram can be acquired by, for example, a computer coupling of phase diagrams and thermochemistry (CALPHAD) method, and for this, an integrated thermodynamic calculation system Thermo-Calc of Thermo-Calc Software AB and a predetermined database (TI3) can be used, for example. In this case, since $Ti_2Cu$ and $Ti_5Si_3$ do not have an influence on the texture change, only an hcp structure and a bec structure are used for the calculation.

Total Rolling Reduction: 80% or more

In a case where the total rolling reduction ((sheet thickness before rolling - sheet thickness after rolling)/sheet thickness before rolling × 100) in the hot rolling is less than 80%, the degree of integration of crystal orientations in which the angle formed between the c-axis and the sheet thickness direction is within 30 degrees is reduced. Therefore, the total rolling reduction in the hot rolling is set to 80% or more.

(IV) or (IV') Hot-Rolled Sheet Annealing Process

In the hot-rolled sheet annealing process, the titanium alloy sheet after the hot rolling process is subjected to annealing. By performing annealing under predetermined conditions, the variation in orientation in the grains can be reduced (the proportion of crystal grains with a low GOS value can be increased).

Specifically, annealing is performed under conditions of an annealing temperature of 600°C or higher and $T_{\beta50}$°C or lower and a combination of a temperature and a time satisfying Expression (1).

$$21{,}500 \leq (T + 273) \times (\mathrm{Log}(t) + 20) \leq 25{,}000 \quad \text{Expression (1)}$$

Here, $(T + 273) \times (\mathrm{Log}(t) + 20)$ is a function called the Larson-Miller parameter (P), T denotes an annealing temperature (°C), t denotes an annealing time (s), and Log denotes a common logarithm.

In a case where the annealing temperature is lower than 600°C, recrystallization may not be completed, the GOS may increase, and the mirror finishing properties may deteriorate. Therefore, the annealing temperature is set to 600°C or higher. The annealing temperature is preferably 630°C or higher.

Meanwhile, in a case where the annealing temperature is higher than $T_{\beta50}$°C, the volume percentage of the β phase may excessively increase during annealing, and the degree of integration of area ratios of crystal grains in which the angle formed between the c-axis and the thickness direction is within 30 degrees may be reduced. Therefore, the annealing temperature is set to $T_{\beta50}$°C or lower. The annealing temperature is preferably $T_{\beta30}$°C or lower.

In addition, in a case where P (the Larson-Miller Parameter) is less than 21,500, recrystallization may not be completed, the GOS may increase, and the mirror finishing properties may deteriorate. Therefore, P is 21,500 or more. P is preferably 23,000 or more.

Meanwhile, in a case where P is more than 25,000, the average grain size may be more than 20.0 $\mu$m and the mirror finishing properties may deteriorate. Therefore, P is 25,000 or less. P is preferably 24,500 or less, and more preferably 24,000 or less.

This process may be omitted in a case where the cold rolling process and the annealing process are performed under conditions to be described below.

(V) Cold Rolling Process

The titanium alloy sheet according to the present embodiment can be obtained up to the hot-rolled sheet annealing process. However, the area ratio of $\alpha_{t-30}$ can be further increased by performing cold rolling and annealing under predetermined conditions. Therefore, in the titanium alloy sheet after the hot rolling process, or in a case where the hot-rolled sheet annealing process is performed, the titanium alloy sheet after the hot-rolled sheet annealing process is cold-rolled as necessary.

In a case where cold rolling is performed, one (a series of cold rolling without intermediate annealing) of cold rolling may be performed, or two or more of cold rolling may be performed with one or more of intermediate annealing interposed therebetween.

In a case where the cold rolling is performed, the rolling reduction in each (before first intermediate annealing, between intermediate annealings, and after final intermediate annealing) is preferably set to 60% or less. In a case where the rolling reduction exceeds 60%, internal cracks may occur and the workability may deteriorate. Otherwise, cracks may appear on the surface depending on the working method and the polishing properties may deteriorate. In addition, in a case where the area ratio of $\alpha_{c-30}$ is increased, the rolling reduction in one cold rolling is preferably 60% or less. The rolling reduction in one cold rolling is more preferably 50% or less. In addition, the rolling reduction may be 0% since the cold rolling is not essential. However, in a case where the area ratio of $\alpha_{t-30}$ is increased, the rolling reduction is preferably set to 30% or more.

The cold rolling and the intermediate annealing may be repeated any number of times, but the number of cold rolling is preferably 4 or less from the viewpoint of manufacturability.

(VI) Annealing Process

In the annealing process, the titanium alloy sheet after the cold rolling process is subjected to annealing. In a case where annealing is performed, conditions of the annealing are the same as those in (IV) hot-rolled sheet annealing process.

That is, annealing is performed under conditions of an annealing temperature of 600°C or higher and $T_{\beta50}$°C or lower and a combination of a temperature and a time satisfying Expression (1).

$$21,500 \leq (T + 273) \times (Log(t) + 20) \leq 25,000 \quad \text{Expression (1)}$$

(VII) Temper Rolling/Tensile Straightening Process

In the temper rolling/tensile straightening process, after the hot-rolled sheet annealing process, or in a case where the cold rolling process and the annealing process are performed, after the annealing process, temper rolling or tensile straightening is performed on the titanium alloy sheet to adjust the shape or the like.

<Manufacturing Method of Eye Glasses>

The eye glasses according to the present embodiment can be manufactured as follows: the titanium alloy sheet according to the present embodiment is worked into a predetermined shape by a known method such as cold working to obtain a component for eye glasses; and the component for eye glasses is combined with lenses or the like. However, during working, it is preferable not to perform working accompanied by a heat treatment since the grain size or the area ratio of $\alpha_{t-30}$ may change by heat treatment. Examples

Titanium ingots as materials of titanium alloy sheets shown in Table 1 were manufactured by a vacuum arc remelting (VAR) method. Thereafter, slabs having a thickness of 60 mm × a width of 120 mm × a length of 250 mm were manufactured by blooming or forging. In Table 1, the remainder consisted of Ti and impurities. Details of the amounts of impurity elements are omitted, but the amounts of each impurity element were 0.10 mass% or less and the total amount was 0.50 mass% or less.

The method of measuring the chemical composition of the slab was as follows.

The O content and the N content were measured by a thermal conductivity/infrared absorption method using an oxygen/nitrogen simultaneous analysis device. The C content was measured by an infrared absorption method using a carbon/sulfur analysis device. H was measured by a thermal conductivity method using a hydrogen analysis device. The amounts of other elements were measured by ICP emission spectrochemical analysis using a sequential ICP emission analyzing device.

In addition, regarding titanium materials A to AC shown in Table 1, state diagrams of the titanium alloys were acquired by a CALPHAD method using an integrated thermodynamic calculation system Thermo-Calc manufactured by Thermo-Calc Software AB and a predetermined database (TI3), and $T_{\beta 10}$, $T_{\beta 20}$, $T_{\beta 30}$, $T_{\beta 50}$, and $T_{\beta 80}$, which are temperatures at which the volume percentage of a $\beta$ phase was 10%, 20%, 30%, 50%, and 80%, were calculated.

The obtained slabs were subjected to hot rolling, hot-rolled sheet annealing, cold rolling, and annealing under conditions shown in Tables 2-1 and 2-2, and titanium alloy sheets each having a sheet thickness shown in Table 3 were obtained. However, a case where the corresponding process was not performed is represented by "-" in the table.

Regarding the cold rolling, in Invention Examples 3, 6, and 7, two to five of cold rolling were performed with intermediate annealing interposed therebetween. The rolling reduction in one cold rolling in the table indicates a rolling reduction in the cold rolling at the highest rolling reduction among a plurality of cold rolling.

However, only in Comparative Example 22, after the hot-rolled sheet annealing, the hot-rolled sheet was subjected to heating to 850°C and hot forging with a reduction of 30% instead of cold rolling, and then annealed by being held at 800°C for 120 seconds.

Although not shown in the table, the chemical compositions of the manufactured hot-rolled sheets were equivalent to the chemical compositions of the titanium slabs shown in Table 1.

From the obtained titanium alloy sheets, the area ratio of the $\alpha$ phase, the average grain size of the $\alpha$ phase, the area ratio of $\alpha_{t\text{-}30}$, the area ratio of $\alpha_{c\text{-}30}$, and the area ratio of crystal grains in which an average value of GOS measured using EBSD was 2.0 or less in $\alpha_{t\text{-}30}$ were obtained.

In the EBSD measurement, the acceleration voltage during the measurement was set to 15 kV, the irradiation current was set to about 40 nA, and the magnification was set to 100 times. In addition, version 7.31 of OIM Analysis was used.

The results are shown in Table 3.

The microstructure included the $\beta$ phase, $Ti_2Cu$, and/or $Ti_5Si_3$ other than the $\alpha$ phase.

The workability and the mirror finishing properties of the obtained titanium alloy sheets were obtained by the following methods.

<Mirror Finishing Properties>

A sample of 10 mm $\times$ 10 nun was cut out from the titanium alloy sheet and embedded in an epoxy resin so that a sheet surface was to be a polished surface. Thereafter, wet polishing was performed in order from coarse grit to fine grit polishing paper and dry buffing was performed to obtain a mirror surface.

The mirror finishing properties were evaluated after dry polishing. In the evaluation of the mirror finishing properties, distinctness of image (DOI), which is a parameter representing image clarity, was used. The DOI was measured according to ASTM D 5767 (2018) at an angle of 20° of incident light. The DOI can be measured using, for example, an appearance analyzer Rhopoint IQ Flex 20 manufactured by Rhopoint Instruments Ltd.

The higher the DOI, the better the mirror finishing properties, and in the present invention, the mirror finishing properties were determined to be excellent in a case where the DOI was 60 or more.

<Workability (Bendability)>

Nine bending test pieces having a width of 25 mm $\times$ a length of 50 mm were cut out from each of the titanium alloy sheets. Thereafter, the test piece was subjected to a 90° bending test relative to a 50 mm length direction, and the surface of an outer circumferential portion after the 90° bending was observed with a stereomicroscope. In that case, as an inside radius of curvature R for the bending test, three types of inside radius of curvature, which are R = 1.25 $\times$ sheet thickness (mm), R = 1.50 $\times$ sheet thickness (mm), and R = 1.75 $\times$ sheet thickness (mm), were set according to the sheet thickness.

The evaluation indexes were as follows, and in a case where no cracks were confirmed on the surface of the outer circumferential portion after the 90° bending with 1.75 $\times$ sheet thickness (mm) (the evaluation result was A, B, C, or D), the workability was determined to be excellent.

However, the bending test was performed in order from a small radius of curvature, and was ended at a time when no cracks occurred. The bending test was performed three times for each radius of curvature. That is, the bending test in which R = 1.25 × sheet thickness was performed on three test pieces, and in a case where no cracks were confirmed in any of the test pieces, the test was ended at that time with an evaluation result of A.

Meanwhile, in a case where cracks were confirmed in one or more of the three test pieces in the bending test in which R = 1.25 × sheet thickness, a bending test in which R = 1.50 × sheet thickness was performed on three other test pieces. As a result, in a case where neither cracks nor irregularities were confirmed on the surface of the outer circumferential portion, the test was ended with an evaluation result of B, and in a case where, although no cracks were present, fine irregularities were confirmed, the test was ended with an evaluation result of C.

Meanwhile, in a case where cracks were confirmed in one or more of the three test pieces in the bending test in which R = 1.50 × sheet thickness, a bending test in which R = 1.75 × sheet thickness was performed on three other test pieces. As a result, in a case where no cracks were confirmed on the surface of the outer circumferential portion, the evaluation result was D, and in a case where cracks were confirmed, the evaluation result was F.

(Evaluation Indexes)

A: Neither cracks nor irregularities were confirmed on the surface of the outer circumferential portion after 90° bending in which R = 1.25 × sheet thickness (mm).

B: Neither cracks nor irregularities were confirmed on the surface of the outer circumferential portion after 90° bending in which R = 1.50 × sheet thickness (mm).

C: Although no cracks were present, fine irregularities were confirmed on the surface of the outer circumferential portion after 90° bending in which R = 1.50 × sheet thickness (mm).

D: No cracks were confirmed on the surface of the outer circumferential portion after 90° bending in which R = 1.75 × sheet thickness (mm).

F: Cracks were confirmed on the surface of the outer circumferential portion after 90° bending in which R = 1.75 × sheet thickness (mm).

FIG. 1 shows examples of the surface of the outer circumferential portion after the bending test.

[Table 1]

| Material | Chemical Composition (mass%) | | | | remainder of Ti and impurities) | | | | $T_{\beta 10}$ (°C) | $T_{\beta 20}$ (°C) | $T_{\beta 30}$ (°C) | $T_{\beta 50}$ (°C) | $T_{\beta 80}$ (°C) |
|---|---|---|---|---|---|---|---|---|---|---|---|---|---|
| | Al | Fe | C | N | H | O | Cu | Si | | | | | |
| A | 2.00 | 0.20 | 0.003 | 0.004 | 0.001 | 0.10 | 0.00 | 0.00 | 881 | 903 | 913 | 924 | 936 |
| B | 1.10 | 0.20 | 0.003 | 0.004 | 0.001 | 0.10 | 0.00 | 0.00 | 865 | 886 | 895 | 904 | 915 |
| C | 3.50 | 0.20 | 0.003 | 0.004 | 0.001 | 0.10 | 0.00 | 0.00 | 908 | 932 | 942 | 955 | 970 |
| D | 2.00 | 0.12 | 0.005 | 0.005 | 0.001 | 0.15 | 0.00 | 0.00 | 901 | 916 | 923 | 932 | 945 |
| E | 2.00 | 0.35 | 0.007 | 0.008 | 0.001 | 0.15 | 0.00 | 0.00 | 854 | 891 | 906 | 922 | 940 |
| F | 2.00 | 0.20 | 0.003 | 0.004 | 0.001 | 0.07 | 0.00 | 0.00 | 880 | 901 | 911 | 921 | 933 |
| G | 2.00 | 0.20 | 0.003 | 0.004 | 0.001 | 0.18 | 0.00 | 0.00 | 886 | 909 | 918 | 930 | 946 |
| H | 2.00 | 0.20 | 0.089 | 0.004 | 0.001 | 0.10 | 0.00 | 0.00 | 888 | 912 | 922 | 936 | 959 |
| I | 2.00 | 0.20 | 0.003 | 0.070 | 0.001 | 0.10 | 0.00 | 0.00 | 889 | 912 | 922 | 936 | 958 |
| J | 2.00 | 0.20 | 0.003 | 0.004 | 0.011 | 0.10 | 0.00 | 0.00 | 862 | 887 | 898 | 911 | 926 |
| K | 6.50 | 0.50 | 0.004 | 0.004 | 0.001 | 0.12 | 0.00 | 0.00 | 897 | 953 | 976 | 1001 | 1024 |
| L | 3.20 | 1.20 | 0.003 | 0.004 | 0.001 | 0.18 | 0.00 | 0.00 | 707 | 830 | 874 | 916 | 953 |
| M | 5.00 | 1.00 | 0.003 | 0.004 | 0.001 | 0.25 | 0.00 | 0.00 | 775 | 881 | 922 | 963 | 1001 |
| N | 5.00 | 1.00 | 0.003 | 0.004 | 0.001 | 0.20 | 1.00 | 0.15 | 783 | 859 | 885 | 923 | 967 |
| O | 5.00 | 1.50 | 0.003 | 0.004 | 0.001 | 0.20 | 0.00 | 0.18 | 660 | 821 | 879 | 932 | 978 |
| P | 2.80 | 0.80 | 0.005 | 0.003 | 0.001 | 0.15 | 1.00 | 0.00 | 782 | 835 | 856 | 887 | 921 |

(continued)

| Material | Chemical Composition (mass%) | | | | remainder of Ti and impurities) | | | | $T_{\beta10}$ (°C) | $T_{\beta20}$ (°C) | $T_{\beta30}$ (°C) | $T_{\beta50}$ (°C) | $T_{\beta80}$ (°C) |
|---|---|---|---|---|---|---|---|---|---|---|---|---|---|
| | Al | Fe | C | N | H | O | Cu | Si | | | | | |
| Q | 2.50 | 0.20 | 0.003 | 0.004 | 0.001 | 0.12 | 0.00 | 0.25 | 887 | 910 | 920 | 932 | 948 |
| R | 2.50 | 0.23 | 0.005 | 0.003 | 0.001 | 0.16 | 1.80 | 0.00 | 821 | 844 | 863 | 890 | 919 |
| S | 0.08 | 0.20 | 0.003 | 0.004 | 0.001 | 0.10 | 0.00 | 0.00 | 847 | 867 | 874 | 882 | 888 |
| T | 7.20 | 0.20 | 0.003 | 0.004 | 0.001 | 0.10 | 0.00 | 0.00 | 975 | 1001 | 1013 | 1027 | 1044 |
| U | 2.00 | 0.08 | 0.005 | 0.005 | 0.001 | 0.15 | 0.00 | 0.00 | 910 | 920 | 926 | 934 | 947 |
| V | 2.00 | 2.30 | 0.007 | 0.008 | 0.001 | 0.15 | 0.00 | 0.00 | 878 | 904 | 915 | 927 | 943 |
| W | 2.00 | 0.20 | 0.003 | 0.004 | 0.001 | 0.03 | 0.00 | 0.00 | 877 | 899 | 908 | 918 | 928 |
| X | 2.00 | 0.20 | 0.003 | 0.004 | 0.001 | 0.33 | 0.00 | 0.00 | 895 | 919 | 930 | 944 | 965 |
| Y | 2.00 | 0.20 | 0.110 | 0.004 | 0.001 | 0.10 | 0.00 | 0.00 | 888 | 911 | 922 | 936 | 959 |
| Z | 2.00 | 0.20 | 0.003 | 0.121 | 0.001 | 0.10 | 0.00 | 0.00 | 895 | 919 | 930 | 945 | 974 |
| AA | 2.00 | 0.20 | 0.003 | 0.004 | 0.015 | 0.10 | 0.00 | 0.00 | 853 | 879 | 891 | 906 | 922 |
| AB | 5.20 | 1.20 | 0.003 | 0.004 | 0.001 | 0.18 | 2.30 | 0.00 | 768 | 840 | 851 | 864 | 917 |
| AC | 5.40 | 1.10 | 0.003 | 0.004 | 0.001 | 0.19 | 0.00 | 0.35 | 752 | 869 | 913 | 957 | 995 |

[Table 2-1]

| No | Material | | | | | | Ilot Rolling Process | | |
|---|---|---|---|---|---|---|---|---|---|
| | Material | $T_{\beta10}$ (°C) | $T_{\beta20}$ (°C) | $T_{\beta30}$ (°C) | $T_{\beta50}$ (°C) | $T_{\beta80}$ (°C) | Heating Temperature (°C) | Completion Temperature (°C) | Rolling Reduction (%) |
| Invention Example 1 | A | 881 | 903 | 913 | 924 | 936 | 920 | 835 | 93 |
| Invention Example 2 | A | 881 | 903 | 913 | 924 | 936 | 920 | 835 | 93 |
| Invention Example 3 | A | 881 | 903 | 913 | 924 | 936 | 920 | 835 | 93 |
| Invention Example 4 | A | 881 | 903 | 913 | 924 | 936 | 920 | 835 | 93 |
| Invention Example 5 | A | 881 | 903 | 913 | 924 | 936 | 920 | 835 | 93 |
| Invention Example 6 | A | 881 | 903 | 913 | 924 | 936 | 920 | 835 | 93 |
| Invention Example 7 | A | 881 | 903 | 913 | 924 | 936 | 920 | 835 | 93 |
| Invention Example 8 | A | 881 | 903 | 913 | 924 | 936 | 890 | 835 | 93 |
| Invention Example 9 | A | 881 | 903 | 913 | 924 | 936 | 930 | 842 | 93 |
| Invention Example 10 | A | 881 | 903 | 913 | 924 | 936 | 920 | 872 | 93 |
| Invention Example 11 | A | 881 | 903 | 913 | 924 | 936 | 920 | 630 | 93 |

(continued)

| No | Material | | | | | | Ilot Rolling Process | | |
|---|---|---|---|---|---|---|---|---|---|
| | Material | $T_{\beta 10}$ (°C) | $T_{\beta 20}$ (°C) | $T_{\beta 30}$ (°C) | $T_{\beta 50}$ (°C) | $T_{\beta 80}$ (°C) | Heating Temperature (°C) | Completion Temperature (°C) | Rolling Reduction (%) |
| Invention Example 12 | A | 881 | 903 | 913 | 924 | 936 | 920 | 835 | 82 |
| Invention Example 13 | A | 881 | 903 | 913 | 924 | 936 | 920 | 835 | 93 |
| Invention Example 14 | A | 881 | 903 | 913 | 924 | 936 | 920 | 835 | 93 |
| Invention Example 15 | A | 881 | 903 | 913 | 924 | 936 | 920 | 835 | 93 |
| Invention Example 16 | B | 865 | 886 | 895 | 904 | 915 | 900 | 815 | 93 |
| Invention Example 17 | C | 908 | 932 | 942 | 955 | 970 | 940 | 851 | 93 |
| Invention Example 18 | D | 901 | 916 | 923 | 932 | 945 | 920 | 834 | 93 |
| Invention Example 19 | E | 854 | 891 | 906 | 922 | 940 | 900 | 811 | 93 |
| Invention Example 20 | F | 880 | 901 | 911 | 921 | 933 | 900 | 827 | 93 |
| Invention Example 21 | G | 886 | 909 | 918 | 930 | 946 | 920 | 835 | 93 |
| Invention Example 22 | H | 888 | 912 | 922 | 936 | 959 | 920 | 836 | 93 |
| Invention Example 23 | I | 889 | 912 | 922 | 936 | 958 | 920 | 836 | 93 |
| Invention Example 24 | J | 862 | 887 | 898 | 911 | 926 | 900 | 821 | 93 |
| Invention Example 25 | K | 897 | 953 | 976 | 1001 | 1024 | 980 | 864 | 93 |
| Invention Example 26 | L | 707 | 830 | 874 | 916 | 953 | 900 | 650 | 93 |
| Invention Example 27 | M | 775 | 881 | 922 | 963 | 1001 | 950 | 752 | 93 |
| Invention Example 28 | N | 783 | 859 | 885 | 923 | 967 | 900 | 743 | 93 |
| Invention Example 29 | O | 660 | 821 | 879 | 932 | 978 | 900 | 630 | 93 |
| Invention Example 30 | P | 782 | 835 | 856 | 887 | 921 | 850 | 764 | 93 |
| Invention Example 31 | Q | 887 | 910 | 920 | 932 | 948 | 920 | 843 | 93 |
| Invention Example 32 | R | 821 | 844 | 863 | 890 | 919 | 900 | 812 | 93 |

(continued)

| No | Material | | | | | | IIot Rolling Process | | |
|---|---|---|---|---|---|---|---|---|---|
| | Material | $T_{\beta 10}$ (°C) | $T_{\beta 20}$ (°C) | $T_{\beta 30}$ (°C) | $T_{\beta 50}$ (°C) | $T_{\beta 80}$ (°C) | Heating Temperature (°C) | Completion Temperature (°C) | Rolling Reduction (%) |
| Invention Example 33 | A | 881 | 903 | 913 | 924 | 936 | 920 | 835 | 93 |
| Comparative Example 1 | A | 881 | 903 | 913 | 924 | 936 | 950 | 842 | 93 |
| Comparative Example 2 | A | 881 | 903 | 913 | 924 | 936 | 920 | 890 | 93 |
| Comparative Example 3 | A | 881 | 903 | 913 | 924 | 936 | 920 | 575 | 93 |
| Comparative Example 4 | A | 881 | 903 | 913 | 924 | 936 | 600 | 450 | 93 |
| Comparative Example 5 | A | 881 | 903 | 913 | 924 | 936 | 920 | 835 | 76 |
| Comparative Example 6 | A | 881 | 903 | 913 | 924 | 936 | 920 | 835 | 93 |
| Comparative Example 7 | A | 881 | 903 | 913 | 924 | 936 | 920 | 835 | 93 |
| Comparative Example 8 | A | 881 | 903 | 913 | 924 | 936 | 920 | 835 | 93 |
| Comparative Example 9 | A | 881 | 903 | 913 | 924 | 936 | 920 | 835 | 93 |
| Comparative Example 10 | S | 847 | 867 | 874 | 882 | 888 | 860 | 812 | 93 |
| Comparative Example 11 | T | 975 | 1001 | 1013 | 1027 | 1044 | 1000 | 882 | 93 |
| Comparative Example 12 | U | 910 | 920 | 926 | 934 | 947 | 920 | 854 | 93 |
| Comparative Example 13 | V | 878 | 904 | 915 | 927 | 943 | 920 | 843 | 93 |
| Comparative Example 14 | W | 877 | 899 | 908 | 918 | 928 | 900 | 817 | 93 |
| Comparative Example 15 | X | 895 | 919 | 930 | 944 | 965 | 920 | 839 | 93 |
| Comparative Example 16 | Y | 888 | 911 | 922 | 936 | 959 | 920 | 835 | 93 |
| Comparative Example 17 | Z | 895 | 919 | 930 | 945 | 974 | 920 | 841 | 93 |
| Comparative Example 18 | AA | 853 | 879 | 891 | 906 | 922 | 900 | 839 | 93 |
| Comparative Example 19 | AB | 768 | 840 | 851 | 864 | 917 | 880 | 751 | 93 |
| Comparative Example 20 | AC | 752 | 869 | 913 | 957 | 995 | 950 | 743 | 93 |

(continued)

| No | Material | | | | | | IIot Rolling Process | | |
|---|---|---|---|---|---|---|---|---|---|
| | Material | $T_{\beta10}$ (°C) | $T_{\beta20}$ (°C) | $T_{\beta30}$ (°C) | $T_{\beta50}$ (°C) | $T_{\beta80}$ (°C) | Heating Temperature (°C) | Completion Temperature (°C) | Rolling Reduction (%) |
| Comparative Example 21 | M | 775 | 881 | 922 | 963 | 1001 | 1070 | 835 | 93 |
| Comparative Example 22 | A | 881 | 903 | 913 | 924 | 936 | 920 | 835 | 93 |

[Table 2-2]

| No | IIot-Rolled Sheet Annealing | | | Cold Rolling + Annealing | | | | |
|---|---|---|---|---|---|---|---|---|
| | Holding Temperature (°C) | IIolding Time (s) | Larson-Miller Parameter | Cold Rolling | Annealing | | | Number of Cold Rolling |
| | | | | Rolling Reduction in One rolling (%) | Holding Temperature (°C) | Holding Time (s) | Larson-Miller Parameter | |
| Invention Example 1 | 800 | 120 | 23694 | - | - | - | - | - |
| Invention Example 2 | 800 | 120 | 23694 | 30 | 800 | 60 | 23371 | 1 |
| Invention Example 3 | 800 | 120 | 23694 | 30 | 800 | 60 | 23371 | 2 |
| Invention Example 4 | 800 | 120 | 23694 | 48 | 800 | 60 | 23371 | 1 |
| Invention Example 5 | 800 | 120 | 23694 | 58 | 800 | 60 | 23371 | 1 |
| Invention Example 6 | 800 | 120 | 23694 | 45 | 800 | 60 | 23371 | 2 |
| Invention Example 7 | 800 | 120 | 23694 | 35 | 800 | 60 | 23371 | 5 |
| Invention Example 8 | 800 | 120 | 23694 | - | - | - | - | - |
| Invention Example 9 | 800 | 120 | 23694 | - | - | - | - | - |
| Invention Example 10 | 800 | 120 | 23694 | - | - | - | - | - |
| Invention Example 11 | 800 | 120 | 23694 | - | - | - | - | - |
| Invention Example 12 | 800 | 120 | 23694 | - | - | - | - | - |
| Invention Example 13 | 630 | 14400 | 21819 | - | - | - | - | - |
| Invention Example 14 | 910 | 5 | 24490 | - | - | - | - | - |
| Invention Example 15 | - | - | - | 30 | 800 | 60 | 23371 | 1 |

(continued)

| No | Hot-Rolled Sheet Annealing | | | Cold Rolling + Annealing | | | | |
|---|---|---|---|---|---|---|---|---|
| | Holding Temperature (°C) | Holding Time (s) | Larson-Miller Parameter | Cold Rolling | Annealing | | | Number of Cold Rolling |
| | | | | Rolling Reduction in One rolling (%) | Holding Temperature (°C) | Holding Time (s) | Larson-Miller Parameter | |
| Invention Example 16 | 680 | 600 | 21711 | - | - | - | - | - |
| Invention Example 17 | 800 | 120 | 23694 | - | - | - | - | - |
| Invention Example 18 | 800 | 120 | 23694 | - | - | - | - | - |
| Invention Example 19 | 800 | 120 | 23694 | - | - | - | - | - |
| Invention Example 20 | 800 | 120 | 23694 | - | - | - | - | - |
| Invention Example 21 | 800 | 120 | 23694 | - | - | - | - | - |
| Invention Example 22 | 800 | 120 | 23694 | - | - | | - | - |
| Invention Example 23 | 800 | 120 | 23694 | - | - | - | - | - |
| Invention Example 24 | 800 | 120 | 23694 | - | - | - | - | - |
| Invention Example 25 | 800 | 120 | 23694 | - | - | - | - | - |
| Invention Example 26 | 800 | 120 | 23694 | - | - | - | - | - |
| Invention Example 27 | 800 | 120 | 23694 | - | - | - | - | - |
| Invention Example 28 | 800 | 120 | 23694 | - | - | - | - | - |
| Invention Example 29 | 800 | 120 | 23694 | - | - | - | - | - |
| Invention Example 30 | 800 | 120 | 23694 | - | - | - | - | - |
| Invention Example 31 | 800 | 120 | 23694 | - | - | - | - | - |
| Invention Example 32 | 800 | 120 | 23694 | - | - | - | - | - |
| Invention Example 33 | 800 | 120 | 23694 | 65 | 800 | 120 | 23694 | 1 |
| Comparative Example 1 | 800 | 120 | 23694 | - | - | - | - | - |
| Comparative Example 2 | 800 | 120 | 23694 | - | - | - | - | - |

(continued)

| No | Hot-Rolled Sheet Annealing | | | Cold Rolling + Annealing | | | | |
|---|---|---|---|---|---|---|---|---|
| | Holding Temperature (°C) | Holding Time (s) | Larson-Miller Parameter | Cold Rolling | Annealing | | | Number of Cold Rolling |
| | | | | Rolling Reduction in One rolling (%) | Holding Temperature (°C) | Holding Time (s) | Larson-Miller Parameter | |
| Comparative Example 3 | The hot-rolled sheet was cracked and the evaluation could not be performed. | | | | | | | |
| Comparative Example 4 | 800 | 120 | 23694 | - | - | - | - | - |
| Comparative Example 5 | 800 | 120 | 23694 | - | - | - | - | - |
| Comparative Example 6 | 590 | 120 | 19058 | - | - | - | - | - |
| Comparative Example 7 | 950 | 96000 | 30557 | - | - | - | - | - |
| Comparative Example 8 | 875 | 120 | 25350 | - | - | - | - | - |
| Comparative Example 9 | 630 | 3600 | 21275 | - | - | - | - | - |
| Comparative Example 10 | 800 | 120 | 23694 | - | - | - | - | - |
| Comparative Example 11 | 800 | 120 | 23694 | - | - | - | - | - |
| Comparative Example 12 | 800 | 120 | 23694 | - | - | - | - | - |
| Comparative Example 13 | 800 | 120 | 23694 | - | - | - | - | - |
| Comparative Example 14 | 800 | 120 | 23694 | - | - | - | - | - |
| Comparative Example 15 | 800 | 120 | 23694 | - | - | - | - | - |
| Comparative Example 16 | 800 | 120 | 23694 | - | - | - | - | - |
| Comparative Example 17 | 800 | 120 | 23694 | - | - | - | - | - |
| Comparative Example 18 | 800 | 120 | 23694 | - | - | - | - | - |
| Comparative Example 19 | 800 | 120 | 23694 | - | - | - | - | - |
| Comparative Example 20 | 800 | 120 | 23694 | - | - | - | - | - |
| Comparative Example 21 | 800 | 120 | 23694 | - | - | - | - | - |
| Comparative Example 22 | 800 | 120 | 23694 | Heating to 850°C, hot forging with a reduction of 30%, and then annealing at 800°C for 120 s | | | | |

[Table 3]

| No | Sheet Thickness (mm) | Microstructure | | | | | Characteristics | |
|---|---|---|---|---|---|---|---|---|
| | | Average Grain Size of α Phase (μm) | Area Ratio of α Phase (%) | Area Ratio of Crystal Grains in which GOS was 2.0 or less in Crystal Grains in which Angle Formed Between c-Axis and Sheet Thickness Direction was within 30 Degrees (%) | Area Ratio of Crystal Grains in which Angle Formed Between c-Axis and Sheet Width Direction was within 30 Degrees (%) | Area Ratio of Crystal Grains in which Angle Formed Between c-Axis and Sheet Thickness Direction was within 30 Degrees (%) | Bendability | Mirror Finishing Properties (DOI) |
| Invention Example 1 | 4.2 | 12.2 | 99 | 97 | 22 | 31 | A | 71 |
| Invention Example 2 | 2.9 | 10.8 | 99 | 96 | 18 | 38 | A | 73 |
| Invention Example 3 | 2.1 | 11.2 | 99 | 97 | 14 | 38 | A | 72 |
| Invention Example 4 | 2.2 | 10.6 | 99 | 95 | 13 | 40 | A | 75 |
| Invention Example 5 | 1.8 | 9.0 | 99 | 92 | 7 | 45 | C | 74 |
| Invention Example 6 | 1.3 | 9.6 | 99 | 97 | 11 | 46 | D | 77 |
| Invention Example 7 | 0.5 | 9.2 | 99 | 91 | 10 | 48 | D | 78 |
| Invention Example 8 | 4.2 | 13.0 | 99 | 93 | 6 | 37 | C | 75 |
| Invention Example 9 | 4.2 | 9.2 | 99 | 96 | 26 | 25 | A | 67 |
| Invention Example 10 | 4.2 | 12.3 | 99 | 83 | 21 | 21 | A | 65 |
| Invention Example 11 | 4.2 | 10.5 | 99 | 92 | 13 | 41 | B | 75 |
| Invention Example 12 | 10.8 | 10.3 | 99 | 95 | 10 | 22 | A | 63 |
| Invention Example 13 | 4.2 | 10.4 | 99 | 82 | 15 | 27 | A | 64 |
| Invention Example 14 | 4.2 | 18.5 | 99 | 97 | 12 | 22 | A | 65 |

(continued)

| No | Sheet Thickness (mm) | Microstructure | | | | | Characteristics | |
|---|---|---|---|---|---|---|---|---|
| | | Average Grain Size of α Phase (μm) | Area Ratio of α Phase (%) | Area Ratio of Crystal Grains in which GOS was 2.0 or less in Crystal Grains in which Angle Formed Between c-Axis and Sheet Thickness Direction was within 30 Degrees (%) | Area Ratio of Crystal Grains in which Angle Formed Between c-Axis and Sheet Width Direction was within 30 Degrees (%) | Area Ratio of Crystal Grains in which Angle Formed Between c-Axis and Sheet Thickness Direction was within 30 Degrees (%) | Bendability | Mirror Finishing Properties (DOI) |
| Invention Example 15 | 2.9 | 12.6 | 99 | 94 | 19 | 31 | A | 72 |
| Invention Example 16 | 4.2 | 10.0 | 99 | 94 | 13 | 28 | A | 62 |
| Invention Example 17 | 4.2 | 13.0 | 99 | 91 | 21 | 26 | B | 74 |
| Invention Example 18 | 4.2 | 17.3 | 99 | 95 | 21 | 35 | A | 64 |
| Invention Example 19 | 4.2 | 9.3 | 99 | 93 | 15 | 25 | B | 72 |
| Invention Example 20 | 4.2 | 10.4 | 99 | 93 | 21 | 31 | A | 64 |
| Invention Example 21 | 4.2 | 11.3 | 99 | 96 | 20 | 29 | B | 71 |
| Invention Example 22 | 4.2 | 11.3 | 99 | 95 | 19 | 28 | D | 73 |
| Invention Example 23 | 4.2 | 12.3 | 99 | 97 | 18 | 33 | D | 74 |
| Invention Example 24 | 4.2 | 10.8 | 97 | 96 | 14 | 31 | D | 71 |
| Invention Example 25 | 4.2 | 11.6 | 99 | 86 | 14 | 33 | D | 91 |
| Invention Example 26 | 4.2 | 12.5 | 92 | 93 | 24 | 25 | D | 83 |
| Invention Example 27 | 4.2 | 8.1 | 94 | 92 | 15 | 34 | D | 87 |
| Invention Example 28 | 4.2 | 6.7 | 88 | 93 | 15 | 26 | D | 88 |

(continued)

| No | Sheet Thickness (mm) | Microstructure | | | | | Characteristics | |
|---|---|---|---|---|---|---|---|---|
| | | Average Grain Size of $\alpha$ Phase ($\mu$m) | Area Ratio of $\alpha$ Phase (%) | Area Ratio of Crystal Grains in which GOS was 2.0 or less in Crystal Grains in which Angle Formed Between c-Axis and Sheet Thickness Direction was within 30 Degrees (%) | Area Ratio of Crystal Grains in which Angle Formed Between c-Axis and Sheet Width Direction was within 30 Degrees (%) | Area Ratio of Crystal Grains in which Angle Formed Between c-Axis and Sheet Thickness Direction was within 30 Degrees (%) | Bendability | Mirror Finishing Properties (DOI) |
| Invention Example 29 | 4.2 | 4.7 | 84 | 94 | 19 | 28 | D | 89 |
| Invention Example 30 | 4.2 | 8.9 | 96 | 92 | 18 | 27 | B | 81 |
| Invention Example 31 | 4.2 | 12.4 | 99 | 91 | 16 | 30 | D | 77 |
| Invention Example 32 | 4.2 | 11.7 | 99 | 92 | 18 | 34 | D | 78 |
| Invention Example 33 | 1.5 | 9.7 | 99 | 94 | 7 | 45 | D | 74 |
| Comparative Example 1 | 4.2 | 12.4 | 99 | <u>75</u> | 35 | <u>15</u> | A | 56 |
| Comparative Example 2 | 4.2 | 9.3 | 99 | <u>76</u> | 32 | <u>13</u> | A | 55 |
| Comparative Example 3 | The hot-rolled sheet was cracked and the evaluation could not be | | | | | | performed. | |
| Comparative Example 4 | 4.2 | 8.5 | 99 | 99 | 3 | <u>51</u> | F | 78 |
| Comparative Example 5 | 14.4 | 12.5 | 99 | 87 | 6 | <u>18</u> | B | 52 |
| Comparative Example 6 | 4.2 | 10.9 | 99 | <u>76</u> | <u>18</u> | 30 | A | 53 |
| Comparative Example 7 | 4.2 | 10.7 | 99 | 91 | 7 | <u>17</u> | C | 58 |
| Comparative Example 8 | 4.2 | <u>21.5</u> | 99 | 96 | 17 | 35 | A | 58 |
| Comparative Example 9 | 4.2 | 1 2.2 | 99 | <u>75</u> | 19 | 28 | A | 56 |

(continued)

| No | Sheet Thickness (mm) | Average Grain Size of α Phase (μm) | Area Ratio of α Phase (%) | Area Ratio of Crystal Grains in which GOS was 2.0 or less in Crystal Grains in which Angle Formed Between c-Axis and Sheet Thickness Direction was within 30 Degrees (%) | Area Ratio of Crystal Grains in which Angle Formed Between c-Axis and Sheet Width Direction was within 30 Degrees (%) | Area Ratio of Crystal Grains in which Angle Formed Between c-Axis and Sheet Thickness Direction was within 30 Degrees (%) | Bendability | Mirror Finishing Properties (DOI) |
|---|---|---|---|---|---|---|---|---|
| | | | | Microstructure | | | Characteristics | |
| Comparative Example 10 | 4.2 | 11.6 | 99 | 93 | 11 | 32 | A | 59 |
| Comparative Example 11 | 4.2 | 8.8 | 99 | 95 | 19 | 28 | F | 92 |
| Comparative Example 12 | 4.2 | 22.1 | 100 | 92 | 10 | 29 | A | 58 |
| Comparative Example 13 | 4.2 | 10.5 | 78 | 97 | 24 | 21 | F | 85 |
| Comparative Example 14 | 4.2 | 10.4 | 99 | 95 | 10 | 24 | A | 58 |
| Comparative Example 15 | 4.2 | 9.6 | 99 | 95 | 12 | 27 | F | 76 |
| Comparative Example 16 | 4.2 | 11.4 | 99 | 90 | 13 | 21 | F | 75 |
| Comparative Example 17 | 4.2 | 10.8 | 99 | 91 | 14 | 22 | F | 77 |
| Comparative Example 18 | 4.2 | 8.8 | 99 | 96 | 10 | 23 | F | 73 |
| Comparative Example 19 | 4.2 | 10.9 | 94 | 94 | 15 | 26 | F | 76 |
| Comparative Example 20 | 4.2 | 12.6 | 93 | 94 | 14 | 21 | F | 74 |
| Comparative Example 21 | 4.2 | 30.0 | 95 | 65 | 59 | 12 | B | 52 |
| Comparative Example 22 | 4.2 | 12.7 | 99 | 90 | 9 | 15 | B | 59 |

As can be seen from Tables 1 to 3, in Invention Examples 1 to 33 in which the area ratio of the α phase, the average grain size of the α phase, the area ratio of $\alpha_{t\text{-}30}$, and the area ratio of crystal grains in which an average value of GOS measured using EBSD was 2.0 or less in $\alpha_{t-30}$ were within the ranges of the present invention, excellent bendability and mirror finishing properties were obtained.

Meanwhile, in Comparative Examples 1, 2, and 4 to 22 in which one or more of the chemical composition, the area ratio of the $\alpha$ phase, the average grain size of the $\alpha$ phase, the area ratio of $\alpha_{t-30}$, and the area ratio of crystal grains in which an average value of GOS measured using EBSD was 2.0 or less in $\alpha_{t-30}$ were out of the ranges of the present invention, it was not possible to obtain sufficient bendability or mirror finishing properties. In Comparative Example 3, the hot-rolled sheet was cracked and not subjected to the subsequent processes, so that the evaluation could not be performed.

In Comparative Example 1, since the heating temperature was high during hot rolling, the area ratio of $\alpha_{t-30}$ and the area ratio of crystal grains in which an average value of GOS was 2.0 or less were out of the ranges of the present invention. As a result, the mirror finishing properties were poor.

In Comparative Example 2, since the hot rolling completion temperature was high, the area ratio of $\alpha_{t-30}$ and the area ratio of crystal grains in which an average value of GOS was 2.0 or less were out of the ranges of the present invention. As a result, the mirror finishing properties were poor.

In Comparative Example 3, the rolling completion temperature was low. Therefore, since a cracked edge was generated in the hot-rolled sheet, the manufacturing was stopped midway and the evaluation was not performed.

In Comparative Example 4, since the hot rolling completion temperature was low, the area ratio of $\alpha_{t-30}$ was out of the range of the present invention. As a result, the bendability was poor. In Comparative Example 4, a cracked edge was generated since the rolling was performed at a low temperature. However, hot rolling was performed by applying reverse rolling, and subsequent processes were performed.

In Comparative Example 5, since the rolling reduction in the hot rolling was low, the area ratio of $\alpha_{t-30}$ was out of the range of the present invention. As a result, the mirror finishing properties were poor.

In Comparative Example 6, since the holding temperature was low during hot-rolled sheet annealing, the Larson-Miller parameter was small, and thus the area ratio of crystal grains in which an average value of GOS was 2.0 or less was out of the range of the present invention. As a result, the mirror finishing properties were poor.

In Comparative Example 7, since the holding temperature was high during hot-rolled sheet annealing, the Larson-Miller parameter was large, and thus the area ratio of $\alpha_{t-30}$ was out of the range of the present invention. As a result, the mirror finishing properties were poor.

In Comparative Example 8, since the Larson-Miller parameter was large during hot-rolled sheet annealing, the average grain size of the $\alpha$ phase was out of the range of the present invention. As a result, the mirror finishing properties were poor.

In Comparative Example 9, since the Larson-Miller parameter was small during hot-rolled sheet annealing, the area ratio of crystal grains in which an average value of GOS was 2.0 or less was out of the range of the present invention. As a result, the mirror finishing properties were poor.

In Comparative Example 10, the Al content was small. As a result, the mirror finishing properties were poor.

In Comparative Example 11, the Al content was large. As a result, the bendability was poor.

In Comparative Example 12, the Fe content was small, and the average grain size of the $\alpha$ phase was out of the range of the present invention. As a result, the mirror finishing properties were poor.

In Comparative Example 13, the Fe content was large, and the area ratio of the $\alpha$ phase was small. As a result, the bendability was poor.

In Comparative Example 14, the O content was small. As a result, the mirror finishing properties were poor.

In Comparative Example 15, the O content was large. As a result, the bendability was poor.

In Comparative Example 16, the C content was large. As a result, the bendability was poor.

In Comparative Example 17, the N content was large. As a result, the bendability was poor.

In Comparative Example 18, the H content was large. As a result, the bendability was poor.

In Comparative Example 19, the Cu content was large. As a result, the bendability was poor.

In Comparative Example 20, the Si content was large. As a result, the bendability was poor.

In Comparative Example 21, since the heating temperature during hot rolling and the hot rolling completion temperature were high, the average grain size of the $\alpha$ phase, the area ratio of crystal grains in which an average value of GOS was 2.0 or less, and the area ratio of $\alpha_{t-30}$ were out of the ranges of the present invention. As a result, the mirror finishing properties were poor.

In Comparative Example 22, forging was performed under the conditions shown in the table, and the area ratio of $\alpha_{t-30}$ was out of the range of the present invention. As a result, the mirror finishing properties were poor.

INDUSTRIAL APPLICABILITY

According to the present invention, it is possible to provide a titanium alloy sheet having excellent workability and mirror finishing properties, and eye glasses including the titanium alloy sheet.

**Claims**

1. A titanium alloy sheet comprising, as a chemical composition, by mass%:

   Al: 1.00% to 7.00%;
   Fe: 0.10% to 1.70%;
   O: 0.05% to 0.30%;
   N: 0.000% to 0.080%;
   C: 0.000% to 0.100%;
   H: 0.000% to 0.013%;
   Cu: 0.00% to 2.00%;
   Si: 0.00% to 0.30%; and
   a remainder: Ti and impurities,
   wherein a microstructure includes, by an area ratio, 80% or more of an $\alpha$ phase,
   an average grain size of the $\alpha$ phase is 20.0 $\mu$m or less,
   an area ratio of crystal grains $\alpha_{t-30}$ in which an angle formed between a c-axis and a thickness direction of the titanium alloy sheet is within 30 degrees in the $\alpha$ phase is 20% to 50%, and
   an area ratio of crystal grains in which an average value of GOS measured using EBSD is 2.0 or less in the $\alpha_{t-30}$ is 80% or more.

2. The titanium alloy sheet according to Claim 1,
   wherein an area ratio of crystal grains $\alpha_{c-30}$ in which an angle formed between the c-axis and a sheet width direction of the titanium alloy sheet is within 30 degrees in the $\alpha$ phase is 8% or more.

3. The titanium alloy sheet according to Claim 1,
   wherein the area ratio of the $\alpha_{t-30}$ is 20% to 40%.

4. The titanium alloy sheet according to Claim 2,
   wherein the area ratio of the $\alpha_{t-30}$ is 20% to 40%.

5. The titanium alloy sheet according to Claim 1,

   wherein the chemical composition includes, by mass%,
   Al: 1.00% to 3.50%,
   Fe: 0.10% to 0.40%,
   O: 0.05% to 0.15%,
   N: 0.000% to 0.080%,
   C: 0.000% to 0.100%,
   H: 0.000% to 0.013%,
   Cu: 0.00% to 2.00%,
   Si: 0.00% to 0.30%, and
   a remainder: Ti and impurities.

6. The titanium alloy sheet according to Claim 2,

   wherein the chemical composition includes, by mass%,
   Al: 1.00% to 3.50%,
   Fe: 0.10% to 0.40%,
   O: 0.05% to 0.15%,
   N: 0.000% to 0.080%,
   C: 0.000% to 0.100%,
   H: 0.000% to 0.013%,
   Cu: 0.00% to 2.00%,
   Si: 0.00% to 0.30%, and
   a remainder: Ti and impurities.

7. The titanium alloy sheet according to Claim 3,

wherein the chemical composition includes, by mass%,
Al: 1.00% to 3.50%,
Fe: 0.10% to 0.40%,
O: 0.05% to 0.15%,
N: 0.000% to 0.080%,
C: 0.000% to 0.100%,
H: 0.000% to 0.013%,
Cu: 0.00% to 2.00%,
Si: 0.00% to 0.30%, and
a remainder: Ti and impurities.

8. The titanium alloy sheet according to Claim 4,

   wherein the chemical composition includes, by mass%,
   Al: 1.00% to 3.50%,
   Fe: 0.10% to 0.40%,
   O: 0.05% to 0.15%,
   N: 0.000% to 0.080%,
   C: 0.000% to 0.100%,
   H: 0.000% to 0.013%,
   Cu: 0.00% to 2.00%,
   Si: 0.00% to 0.30%, and
   a remainder: Ti and impurities.

9. The titanium alloy sheet according to any one of Claims 1 to 8,
   wherein a sheet thickness is 12 mm or less.

10. Eye glasses comprising:
    the titanium alloy sheet according to any one of Claims 1 to 8.

11. Eye glasses comprising:
    the titanium alloy sheet according to Claim 9.

FIG. 1

(A)  (B)  (C)

2000μm   2000μm   2000μm

## INTERNATIONAL SEARCH REPORT

| International application No. |
|---|
| **PCT/JP2023/021740** |

**A.    CLASSIFICATION OF SUBJECT MATTER**

*C22C 14/00*(2006.01)i; *C22F 1/00*(2006.01)i; *C22F 1/18*(2006.01)i; *G02C 5/00*(2006.01)i
FI:    C22C14/00 Z; G02C5/00; C22F1/18 H; C22F1/00 604; C22F1/00 623; C22F1/00 630K; C22F1/00 673; C22F1/00 682; C22F1/00 683; C22F1/00 684B; C22F1/00 684C; C22F1/00 685Z; C22F1/00 686A; C22F1/00 691B; C22F1/00 691C; C22F1/00 694A; C22F1/00 694B

According to International Patent Classification (IPC) or to both national classification and IPC

**B.    FIELDS SEARCHED**

Minimum documentation searched (classification system followed by classification symbols)

C22C14/00; C22F1/00; C22F1/18; G02C5/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| A | WO 2019/044851 A1 (NIPPON STEEL & SUMITOMO METAL CORP.) 07 March 2019 (2019-03-07) | 1-11 |
| A | WO 2020/213719 A1 (NIPPON STEEL CORP.) 22 October 2020 (2020-10-22) | 1-11 |
| A | JP 2021-80519 A (NIPPON STEEL CORP.) 27 May 2021 (2021-05-27) | 1-11 |
| A | WO 2017/175569 A1 (KABUSHIKI KAISHA KOBE SEIKO SHO) 12 October 2017 (2017-10-12) | 1-11 |
| A | WO 2016/152935 A1 (KABUSHIKI KAISHA KOBE SEIKO SHO) 29 September 2016 (2016-09-29) | 1-11 |

☐ Further documents are listed in the continuation of Box C.        ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **15 August 2023** | **22 August 2023** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

**INTERNATIONAL SEARCH REPORT**
Information on patent family members

International application No.

**PCT/JP2023/021740**

| Patent document cited in search report | | | Publication date (day/month/year) | Patent family member(s) | | | Publication date (day/month/year) |
|---|---|---|---|---|---|---|---|
| WO | 2019/044851 | A1 | 07 March 2019 | US | 2020/0362438 | A1 | |
| | | | | CN | 111032896 | A | |
| WO | 2020/213719 | A1 | 22 October 2020 | KR | 10-2021-0080520 | A | |
| | | | | CN | 113165032 | A | |
| | | | | TW | 202039876 | A | |
| JP | 2021-80519 | A | 27 May 2021 | (Family: none) | | | |
| WO | 2017/175569 | A1 | 12 October 2017 | JP | 2017-186672 | A | |
| WO | 2016/152935 | A1 | 29 September 2016 | JP | 2017-137561 | A | |
| | | | | US | 2018/0047996 | A1 | |
| | | | | EP | 3276017 | A1 | |
| | | | | KR | 10-2017-0117579 | A | |
| | | | | CN | 107406917 | A | |
| | | | | RU | 2017134929 | A | |

Form PCT/ISA/210 (patent family annex) (January 2015)

**EP 4 582 574 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022136623 A
- WO 2019044851 A
- JP 2001220631 A